# FASCICULE DE BREVET EUROPEEN

(11) **EP 1 710 474 B1**
(45) Date de publication et mention de la délivrance du brevet: **05.10.2011**
(21) Numéro de dépôt: 06300311.5
(22) Date de dépôt: 30.03.2006
(51) Int. Cl.: F16H 61/24

(54) **Dispositif de commande pour boîte de vitesses manuelle**
Schalteinrichtung zur Betätigung eines manuellen Schaltgetriebes
Gear shift device for control of a manual gearbox

(30) Priorité: 06.04.2005 FR 0503389
(43) Date de publication de la demande: 11.10.2006
(73) Titulaire: Peugeot Citroën Automobiles SA, 78140 Vélizy-Villacoublay (FR)
(72) Inventeur: Ploe, Pierre, 92800 Puteaux (FR)

(56) Documents cités:
- EP-A- 1 116 902
- DE-A1- 10 210 972
- FR-A- 2 803 252
- FR-A- 2 833 540

## Description

L'invention concerne la commande interne des boîtes de vitesses manuelles et le confort des passages de vitesses utilisant un système à base de masse inertielle.

Elle concerne plus particulièrement un système d'entraînement de masse inertielle en mode de passage de vitesses et découplage de la masse en mode sélection de vitesses.

Le rôle de la masse inertielle est d'augmenter significativement l'inertie globale de la commande, de manière à adoucir l'effet du passage des vitesses au niveau du levier de vitesses et donc d'augmenter le confort de passage de vitesses pour le conducteur.

### ARRIERE-PLAN DE L'INVENTION

Généralement, la masse inertielle est fixée directement sur le levier de passage de vitesses. Cette implémentation est économique mais nécessite l'emploi d'une masse importante de l'ordre du kilogramme pour atteindre une inertie suffisante de l'ordre de 7000 kg.mm².

Par contre, dans le cas d'un levier pivotant pour le mode passage des vitesses et translatant pour le mode sélection des vitesses, la masse inertielle intervient aussi dans le mode sélection, ce qui est défavorable pour le fonctionnement recherché dans ce mode.

Afin de pallier ce problème, il est connu d'utiliser des systèmes qui permettent de découpler la masse inertielle en fonction du mode utilisé. Ces systèmes sont dits à masse "découplée". (Voir par exemple le document FR 2 833 540)

Dans ce type de système, une masselotte fixe est portée au bout d'un bras rotatif dont l'axe est directement fixé en rotation sur le carter de la boîte de vitesses à l'extérieur du carter. Cette masselotte est déplacée en rotation par le déplacement en rotation du levier de passage des vitesses par l'intermédiaire d'une pièce de renvoi couplant le levier à la masselotte. Bien que permettant plusieurs rapports de démultiplications, ce type de système nécessite l'emploi d'une masselotte de masse importante et relativement encombrante.

On connaît également notamment du document FR 2 803 252, un système d'entraînement par crémaillère d'une masse pivotante située à l'extérieur d'une boîte de vitesses et proposant un déplacement en sélection du levier par rotation via un engrènement d'un secteur denté sur un pignon couplé à la masse. Cette architecture permet également un découplage du déplacement axial du levier mais nécessite une attention particulière dans la réalisation du pignon qui ne doit pas s'user localement face aux couloirs de passage de vitesses et entraîner des accrocs de sélection dus à une usure discontinue sur la longueur du pignon. De plus, le parallélisme à obtenir entre l'axe de translation de la crémaillère et l'axe du pignon doit être particulièrement précis pour ne pas engendrer des prises de jeu ou des coincements discontinus en sélection.

On connaît également du document DE-A-102 10 972, un système d'entraînement d'une masse inertielle selon le préambule de la revendication 1, couplée à un levier de passage de vitesses d'une boîte de vitesses manuelle, comportant une liaison mécanique pour entraîner la masse en rotation autour de son axe de symétrie sous l'action de la rotation du levier de passage, ledit système d'entraînement et la masse inertielle étant disposés à l'intérieur du carter de la boîte de vitesses, la masse étant libre en rotation par rapport au carter, la liaison mécanique comportant un moyen formant une fourche solidaire du levier de passage, entraînant une tige solidaire d'une deuxième extrémité d'une pièce de renvoi apte à pivoter autour d'un pivot fixé au carter et se terminant à sa première extrémité par une crémaillère entraînant la masse en rotation.

### OBJET DE L'INVENTION

L'invention a pour objet un système d'entraînement d'une masse inertielle par rotation du levier de passage de vitesses, résistant à l'usure et permettant une démultiplication évolutive.

Un autre avantage de la présente invention est de proposer un système d'entraînement compact permettant son intégration à l'intérieur du carter de la boîte de vitesses.

Outre le but d'augmenter le confort des passages de vitesses sur un véhicule équipé d'une boîte de vitesses manuelle, confort ressenti par le conducteur, le système selon l'invention a encore pour avantage d'augmenter le rendement énergétique par rapport à une solution du type décrit précédemment. L'énergie inertielle restituée par la masse au levier de passage de vitesses bénéficie ainsi d'une démultiplication plus favorable.

### BREVE DESCRIPTION DE L'INVENTION

L'invention a pour objet, un système d'entraînement d'une masse inertielle couplée à un levier de passage de vitesses d'une boîte de vitesses manuelle, conforme à la revendication 1.

La crémaillère comporte un secteur denté engrenant avec un pignon coaxial à l'arbre et solidaire de la masse. Le pignon est disposé en bout de l'arbre de rotation de la masse et il est adjacent à une face radiale de la masse.

Selon une autre caractéristique avantageuse, l'entraxe axe levier de passage /axe tige d'entraînement est variable entre deux positions extrêmes imposées par le débattement du levier de passage définissant une deuxième démultiplication évolutive.

### BREVE DESCRIPTION DES DESSINS

D'autres caractéristiques et avantages de la présente invention apparaîtront plus clairement à la lecture de la description suivante d'un mode de réalisation non limitatif de celle-ci, en se rapportant aux dessins annexés, sur lesquels :
- la figure 1 illustre une vue en perspective d'un mode de réalisation selon l'invention dans une position de repos (point mort) de la boîte de vitesses ;
- la figure 2 illustre une autre vue en perspective du mode de réalisation selon l'invention, mettant en évidence le découplage du système d'entraînement après translation du levier de passage de vitesses ;
- la figure 3 illustre une autre vue en perspective du mode de réalisation selon l'invention, mettant en évidence l'entraînement en rotation de la masse inertielle sous l'effet de la rotation du levier de passage de vitesses ; et
- la figure 4 illustre une vue en bout de levier de passage, mettant en évidence le principe de démultiplication évolutive du système d'entraînement selon l'invention.

Sur ces figures, les mêmes éléments sont désignés par les mêmes repères.

### DESCRIPTION DETAILLEE DE L'INVENTION

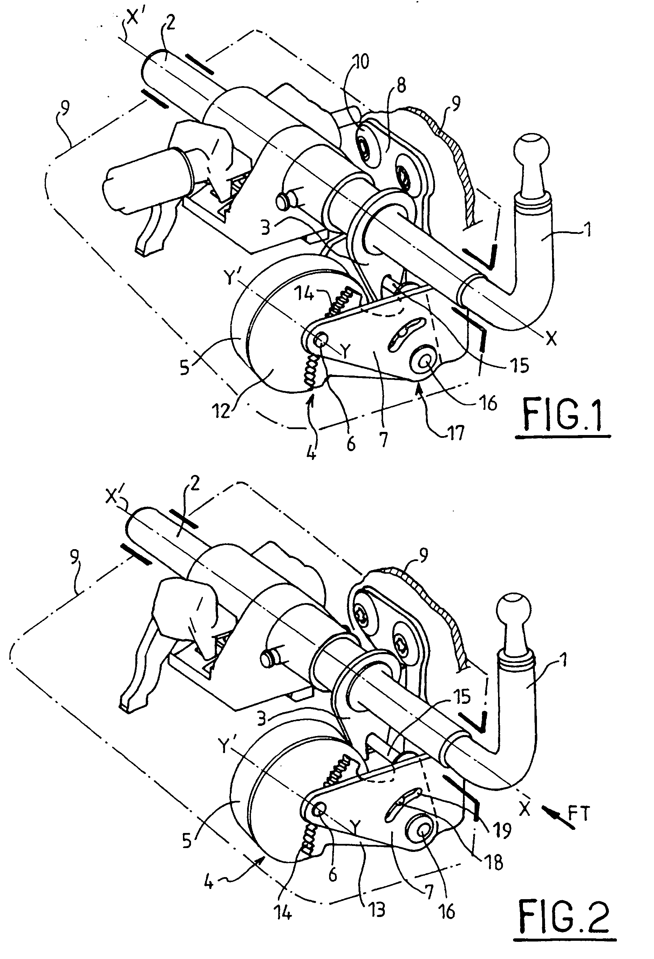

Les figures 1 à 4 illustrent un mode de réalisation d'un système d'entraînement selon l'invention. On a représenté sur ces vues un levier de passage 1, actionné par un câble ou une barre de commande, non représentée, elle-même reliée au levier de vitesse du conducteur de façon à déplacer en rotation l'arbre de commande interne 2 pour le passage des vitesses et pouvant commander également la sélection des vitesses par une translation de ce même levier 1. Le levier 1 est disposé coaxialement au bout de l'arbre de commande interne 2. Le levier 1 est muni d'une fourche 3, solidaire du levier 1, qui s'étend dans un plan perpendiculaire à l'axe du levier 1. Cette fourche 3 à son extrémité libre qui forme une échancrure en forme générale de U ; l'espace ainsi formé entre les deux branches du U formant rainure de guidage.

On a représenté également un système inertiel 4 comportant une masse inertielle 5 cylindrique symétrique par rapport à son axe de rotation YY'. L'axe YY' est matérialisé par un arbre 6 solidaire de la masse 5 et qui dépasse de part et d'autre de la masse 5. La masse 5 est liée en rotation, via les extrémités libres de l'arbre 6, aux extrémités libres de deux bras 7 (un seul bras est visible) d'un support 8 fixé au carter 9 de boîte de vitesses. Le carter 9 est ici partiellement représenté et son contour est symbolisé par une ligne fermée en trait mixte. Les deux bras 7 s'étendent respectivement de part et d'autre de la masse 5 et perpendiculairement à l'axe de rotation YY' de la masse 5. La masse 5 est donc apte à pivoter à l'intérieur des deux bras 7.

Ces deux bras 7 formant une fourche, se rejoignent sous le levier 1, dans un plan perpendiculaire aux bras 7. Le support 8 est lui-même fixé sur le carter 9 et à l'intérieur de celui-ci par deux vis 10.

Une des extrémités de l'arbre 6 de la masse 5 se termine par un pignon, ou pignon d'inertie 11, qui est disposé entre la face radiale 12 de la masse 5 et l'intérieur d'un des bras 7 du support 8 que l'on appellera "bras extérieur". Sur les figures, il s'agit du bras visible qui est situé du côté du la partie recourbée à angle droit du levier de passage 1. Le pignon 11 engrène avec une première extrémité d'une pièce de renvoi 13, conformée en secteur denté 14. Le rapport de démultiplication entre le secteur denté 14 et le pignon d'inertie 11 est déterminé pour permettre une inertie fonctionnelle suffisante même pour une faible valeur de la masse 5.

La pièce de renvoi 13 s'étend perpendiculairement au levier 1 et vers le levier 1, entre la masse 5 et le bras extérieur 7, dans un plan parallèle au bras 7. Elle est coudée vers le levier 1, à une distance déterminée du secteur denté 14. La deuxième extrémité libre recourbée de la pièce de renvoi 13 supporte une tige d'entraînement 15 solidaire de la pièce de renvoi 13. La pièce de renvoi 13 est elle-même supportée en rotation par le biais d'un axe formant pivot 16, disposé entre les deux bras 7 du support dans la partie de la pièce de renvoi 13 formant un coude 17. L'axe du pivot 16 s'étend parallèlement à l'axe du levier de passage 1 et sensiblement dans le même plan.

Cet agencement forme un système de type à crémaillère.

La tige 15 est engagée en permanence dans la fourche 3, solidaire du levier 1, et coopère avec l'échancrure de la fourche 3, de manière à ce que la fourche 3 entraîne la pièce de renvoi 13 en rotation autour du pivot 16 sous l'action d'une rotation du levier de passage 1.

L'agencement particulier de la fourche 3 et de la tige d'entraînement 15, solidaire de la pièce de renvoi 13, permet en outre le déplacement en translation du levier 1 et donc de la fourche 3 le long de la tige d'entraînement 15 ; le déplacement en translation du levier 1 se faisant dans une direction parallèle à l'axe de la tige d'entraînement 15.

La pièce de renvoi 13 comporte également un doigt de guidage 18 faisant saillie perpendiculairement de la face latérale extérieure de la pièce de renvoi 13 et qui est disposé entre le creux du coude 17 de la pièce de renvoi 13, formé par la partie recourbée de la pièce de renvoi 13, et l'axe du pivot 16, à proximité du creux.

Le doigt 18 coopère avec une lumière de guidage 19 ménagée dans l'épaisseur du bras extérieur 7 de la pièce de renvoi 13, et en regard du doigt 18.

La lumière de guidage 19 présente une forme oblongue en arc de cercle de même centre que l'axe du pivot 16.

La figure 1, illustre un état du système d'entraînement au repos, dans lequel le levier de passage est représenté dans sa position en repos, c'est-à-dire dans une position A qui correspond au point mort : pas de passage ni de sélection de vitesse.

Dans cet état, la tige d'entraînement 15 est engagée dans l'échancrure de la fourche 3 et le système inertiel 4 est au repos : la masse 5 ne tourne pas. La fourche 3 est positionnée sensiblement à mi-longueur de la tige d'entraînement 15 et l'axe YY' de la masse inertielle 5 coïncide sensiblement avec le milieu du secteur denté 14 de la pièce de renvoi 13.

La figure 2, illustre un état du système d'entraînement après une sélection d'une vitesse via un levier de sélection de vitesses, non représenté. Par rapport à l'état de repos de la figure 1, la fourche 3 s'est déplacée en translation le long du doigt d'entraînement 15 dans une direction parallèle à l'axe XX' du levier de passage 1 suivant le sens de la flèche FT. Ce déplacement en translation de la fourche 3 et donc du levier de passage 1, sans rotation du levier de passage 1, n'a aucun effet sur le système inertiel 4 constitué de la pièce de renvoi 13, le secteur denté 14, le pignon 11 et en final la masse inertielle 5.

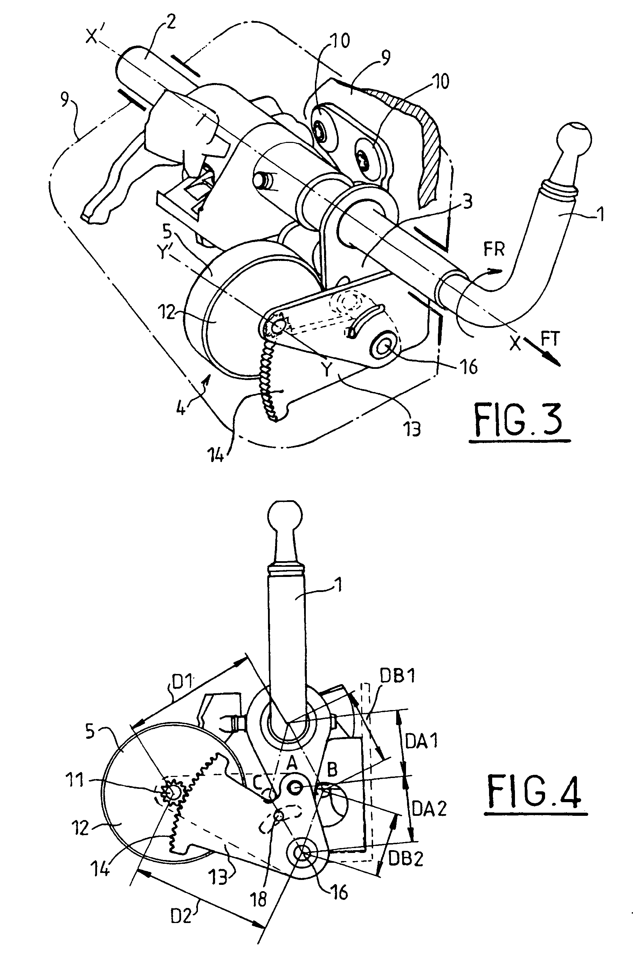

La figure 3, illustre un état du système d'entraînement dans lequel la fourche 3 a subi un déplacement en translation suivant le sens de la flèche FT et un déplacement en rotation suivant le sens de rotation de la flèche FR sous l'action respective du levier de sélection (non représenté) et du levier de passage 1, par rotation du levier de passage 1 autour de son axe longitudinal XX'.

Comme expliqué, ci-dessus, le déplacement en translation de la fourche 3 n'a eu aucun effet sur le système inertiel 4, par contre la rotation de la fourche 3 dans un sens de rotation opposé à celui indiqué par la flèche FR, commandée par déplacement en rotation du levier de passage 1, a eu pour effet de coupler le système inertiel 4 au passage de vitesses.

Le couplage du système d'entraînement est décrit ci-après en détail.

La rotation de la fourche 3, dans un sens de rotation opposé à celui du levier 1, entraîne la rotation de la pièce de renvoi 13 autour de son pivot 16 par l'intermédiaire de la tige 15 solidaire de la pièce de renvoi 13 qui est en permanence engagée dans l'échancrure de la fourche 3 formant guide pour la tige 15.

Par l'effet du pivot 16, la pièce de renvoi 13 pivote dans un sens de rotation opposé à celui de la fourche 3 et entraîne en rotation la masse inertielle 5 suivant une démultiplication imposée par le nombre de dents et les diamètres respectifs du secteur denté 14 et du pignon d'inertie 11.

Le mouvement de rotation de la pièce de renvoi 13 est par ailleurs guidé par le doigt de guidage 18 à l'intérieur d'une lumière 19 en arc de cercle ménagée dans le bras 7 du support 8. Les parties extrêmes de la lumière 19 définissent respectivement des butées de fin de course pour le doigt 18. Ces butées garantissent le maintien de l'engrènement du secteur denté 14 avec le pignon d'inertie 11 durant le débattement de la pièce de renvoi 13.

On pourra facilement comprendre, sans pour cela le décrire, qu'un mouvement de rotation dans un sens opposé à celui décrit à la figure 3, entraînera le système inertiel 4 dans le sens inverse ; les mêmes éléments coopérant de la même manière mais dans un sens opposé.

L'agencement particulier qui vient d'être décrit permet donc un "découplage" total entre un mode en translation, correspondant à la sélection des vitesses, et un mode en rotation correspondant au passage des vitesses.

La figure 4 illustre une vue en bout du levier de passage 1 permettant de mettre en évidence les différentes démultiplications mises en jeu par le système d'entraînement selon l'invention.

Cette vue permet également de mettre en évidence la compacité de l'agencement ainsi réalisé permettant une intégration du système d'entraînement à l'intérieur de la boîte de vitesse.

Cet agencement met en oeuvre deux types de démultiplication : une première démultiplication dite "primaire" et une deuxième démultiplication dite "secondaire".

On entend par démultiplication primaire la démultiplication définie par le rapport entre l'entraxe axe XX' du levier de passage 1 / axe tige d'entraînement 15, DA1, et l'entraxe axe tige d'entraînement 15 / axe pivot 16, dans la position de repos M, DA2 ; les deux distances DA1 et DA2 étant choisies égales.

Ce qui signifie que dès le début de l'entraînement de la crémaillère 14, donc de la masse 5, la démultiplication primaire est égale à 1.

On choisit par ailleurs un entraxe axe levier de passage 1 / axe masse 5, D1, inférieur à l'entraxe axe pivot 16 / axe masse 5, D2.

Le débattement de la crémaillère 4, c'est-à-dire la course de la pièce de renvoi 13 autour de son pivot 16, et de façon symétrique par rapport à l'état de repos A, de l'ordre de +/- 20°, éloigne l'axe de la tige d'entraînement 15 de l'axe XX' du levier de passage 1 jusqu'à atteindre les positions de fin de course, respectivement B et C. Ce qui a pour effet de modifier la démultiplication primaire pour atteindre une démultiplication secondaire différente de la démultiplication primaire.

Au repos, l'axe du pivot 16 et l'axe de la tige d'entraînement 15 sont sensiblement alignés.

Cette évolution de la démultiplication primaire permet d'obtenir un rapport de 1 lors de la mise en inertie de la masse 5 par le levier de passage 1, et d'obtenir un rapport inférieur à 1 lors de la restitution de l'inertie au levier 1. L'énergie inertielle ainsi restituée par la masse 5 au levier de passage 1 bénéficie d'une démultiplication plus favorable au sens du rendement énergétique.

L'introduction d'une démultiplication secondaire à entraxe augmenté permet de diminuer la masse de la masse inertielle 5 et donc la masse globale du système.

La présente invention n'est bien sûr pas limitée au mode de réalisation décrit. En particulier, toutes les formes de crémaillère et organe d'entraînement conformes à la définition donnée par les revendications rentre dans le cadre de la présente invention.

## Revendications

1. Système d'entraînement d'une masse inertielle (5) couplée à un levier de passage de vitesses (1) d'une boîte de vitesses manuelle, comportant une liaison mécanique pour entraîner la masse (5) en rotation autour de son axe de symétrie (YY') sous l'action de la rotation du levier de passage (1), ledit système d'entraînement et la masse inertielle (5) étant disposable à l'intérieur du carter (9) de la boîte de vitesses, la masse (5) étant libre en rotation par rapport au carter (9), la liaison mécanique comportant un moyen formant une fourche (3) solidaire du levier de passage (1), entraînant une tige (15) solidaire d'une deuxième extrémité d'une pièce de renvoi (13) apte à pivoter autour d'un pivot (16) fixable au carter (9) et se terminant à sa première extrémité par une crémaillère (4) entraînant la masse (5) en rotation, **caractérisé en ce** la fourche (3) s'étend dans un plan perpendiculaire à l'axe (XX') du levier (1) en étant apte à coulisser le long de la tige (15) qui s'étend selon une direction parallèle à l'axe (XX') du levier de passage (1) et en ce que ladite pièce de renvoi (13) forme un coude (17) dans lequel est disposé le pivot (16) et dont sa deuxième extrémité s'étend dans un plan perpendiculaire à l'axe du levier (1), vers le levier (1), l'axe du pivot (16) s'étendant parallèlement à l'axe (XX') du levier (1) et sensiblement dans le même plan.

2. Système d'entraînement selon la revendication 1, **caractérisé en ce que** la crémaillère (4) comporte un secteur denté (14) engrenant avec un pignon (11) coaxial à un arbre (6) de rotation matérialisant l'axe de symétrie (YY') et solidaire de la masse (5).

3. Système d'entraînement selon la revendication 2, **caractérisé en ce que** le pignon (11) est disposé en bout de l'arbre (6) de rotation de la masse (5).

4. Système d'entraînement selon la revendication 3, **caractérisé en ce que** le pignon (11) est adjacent à une face radiale de la masse (5).

5. Système selon l'une quelconque des revendications précédentes, **caractérisé en ce que** l'entraxe (DA1, DA2) axe (XX') levier de passage (1) /axe tige d'entraînement (15) est variable entre deux positions extrêmes (B, C) imposées par le débattement du levier de passage (1) définissant une deuxième démultiplication (DB1, DB2) évolutive.

## Claims

1. System for entrainment of an inertial mass (5) coupled to a gear shifting lever (1) of a manual gear box, comprising a mechanical linkage for entraining the mass (5) in rotation about its axis of symmetry (YY') under the action of the rotation of the shifting lever (1), the said entrainment system and the inertial mass (5) being able to be disposed in the interior of the case (9) of the gear box, the mass (5) being free in rotation with respect to the case (9), the mechanical linkage comprising a means forming a fork (3) integral with the shifting lever (1), entraining a rod (15) integral with a second end of a returning part (13) suited to pivot about a pivot (16) which is able to be fixed to the case (9) and terminating at its first end by a rack (4) entraining the mass (5) in rotation, **characterized in that** the fork (3) extends in a plane perpendicular to the axis (XX') of the lever (1), being suited to slide along the rod (15) which extends according to a direction parallel to the axis (XX') of the shifting lever (1) and **in that** the said returning part (13) forms an elbow (17) in which the pivot (16) is disposed, and its second end of which extends in a plane perpendicular to the axis of the lever (1), towards the lever (1), the axis of the pivot (16) extending parallel to the axis (XX') of the lever (1) and substantially in the same plane.

2. Entrainment system according to Claim 1, **characterized in that** the rack (4) comprises a toothed sector (14) meshing with a pinion (11) coaxial to a rotation shaft (6) marking the axis of symmetry (YY') and integral with the mass (5).

3. Entrainment system according to Claim 2, **characterized in that** the pinion (11) is disposed at the end of the rotation shaft (6) of the mass (5).

4. Entrainment system according to Claim 3, **characterized in that** the pinion (11) is adjacent to a radial face of the mass (5).

5. System according to any one of the preceding claims, **characterized in that** the distance of axes (DA1, DA2) axis (XX') shifting lever (1) / axis entrainment rod (15) is variable between two extreme positions (B, C) imposed by the displacement of the shifting lever (1) defining a second progressive reduction (DB1, DB2).

## Patentansprüche

1. Antriebssystem einer Trägheitsmasse (5), die mit einem Schalthebel (1) eines manuellen Schaltgetriebes gekoppelt ist, das eine mechanische Verbindung aufweist, um die Masse (5) in Drehung um ihre Symmetrieachse (YY') unter der Einwirkung der Drehung des Schalthebels (1) anzutreiben, wobei das Antriebssystem und die Trägheitsmasse (5) im Inneren des Gehäuses (9) des Schaltgetriebes angeordnet werden können, wobei die Masse (5) in Drehung in Bezug zu dem Gehäuse (9) frei ist, wobei die mechanische Verbindung ein Mittel aufweist, das eine Gabel (3) bildet, die mit dem Schalthebel (1) fest verbunden ist, die einen Schaft (15) antreibt, der fest mit einem zweiten Ende eines Umlenkteils (13) verbunden ist, der um einen Zapfen (16) schwenken kann, der an dem Gehäuse (9) befestigt werden kann und an seinem ersten Ende in einer Zahnstange (4) endet, die die Masse (5) in Drehung antreibt, **dadurch gekennzeichnet, dass** sich die Gabel (3) in einer Ebene senkrecht zu der Achse (XX') des Hebels (1) erstreckt und entlang des Schafts (15), der sich entlang einer Richtung parallel zu der Achse (XX') des Schalthebels (1) erstreckt, gleiten kann, und dass der Umlenkteil (13) einen Winkel (17) bildet, in dem der Zapfen (16) angeordnet ist, und dessen zweites Ende sich in einer Ebene senkrecht zu der Achse des Hebels (1) zu dem Hebel (1) erstreckt, wobei sich die Achse des Zapfens (16) parallel zu der Achse (XX') des Hebels (1) und im Wesentlichen in der gleichen Ebene erstreckt.

2. Antriebssystem nach Anspruch 1, **dadurch gekennzeichnet, dass** die Zahnstange (4) einen Zahnabschnitt (14) aufweist, der in ein Ritzel (11), das zu einer Rotationswelle (6), koaxial ist, die die Symmetrieachse (YY') darstellt und mit der Masse (5) fest verbunden ist, eingreift.

3. Antriebssystem nach Anspruch 2, **dadurch gekennzeichnet, dass** das Ritzel (11) am Ende der Rotationswelle (6) der Masse (5) angeordnet ist.

4. Antriebssystem nach Anspruch 3, **dadurch gekennzeichnet, dass** das Ritzel (11) neben einer radialen Seite der Masse (5) liegt.

5. System nach einem der vorhergehenden Ansprüche, **dadurch gekennzeichnet, dass** der Achsabstand (DA1, DA2) Achse (XX') Schalthebel (1) / Achse Antriebsschaft (15) zwischen zwei Endpositionen (B, C), die von dem Ausschlagen des Steuerhebels (1) auferlegt werden, das eine zweite evolutive Untersetzung (DB1, DB2) definiert, variabel ist.
